# FASCICULE DE BREVET EUROPEEN

(11) **EP 1 844 897 B1**
(45) Date de publication et mention de la délivrance du brevet: **02.12.2009**
(21) Numéro de dépôt: 07105854.9
(22) Date de dépôt: 10.04.2007
(51) Int. Cl.: B23Q 11/00

(54) **Système d'extraction de copeaux et/ou de poussière pour une tête d'une fraiseuse avec changement automatique d'outil**
System zur Absaugung von Spänen und/oder Staub für den Kopf einer Fräsmaschine mit automatischem Werkstückwechsel
System for extracting chips and/or dust for a milling head equipped with automatic tool changing

(30) Priorité: 10.04.2006 ES 200600916
(43) Date de publication de la demande: 17.10.2007
(73) Titulaire: Soraluce, S. Coop, 20870 Elgoibar Guipuzcoa (ES); Ortza S. Coop, 20870 Elgiobar Guipuzcoa (ES); Ideko, S. Coop, 20870 Elgoibar Guipuzcoa (ES)
(72) Inventeur: Alzaga Olaneta, Xabier, 20870, Elgoibar (Guipuzcoa) (ES); Lizarralde Dorronsoro, Rafael, 20870 Elgoibar ( Guipuzcoa) (ES); Gorostiaga Urcelay, Garbiñe, 20870, Elgoibar (Guipuzcoa) (ES); Gandarias Mintegui, Asier, 20870, Elgoibar (Guipuzcoa) (ES); Mendia Olabarria, Ángel Maria, 20570, Bergara (Guipuzcoa) (ES); Gallarraga Arostegui, Iñigo, 20570, Bergara (Guipuzcoa) (ES); Martin Estefania, Gonzalo, 20750, Zumaia (Guipuzcoa) (ES)
(74) Mandataire: Intes, Didier Gérard André

(56) Documents cités:
- EP-A- 1 738 866
- WO-A-00/59667
- DE-C1- 19 512 401
- DE-U1- 9 401 622
- JP-A- 2002 166 320

## Description

### Domaine de la technique

La présente invention concerne l'usinage, par machine-outil, de matériaux qui, lors de leur usinage, génèrent de la poussière ou des copeaux légers, faciles à aspirer, comme dans le cas des composites, matériaux céramiques, graphites, etc. ; en proposant concrètement un système pour l'extraction par aspiration des copeaux et/ou de la poussière générés lors de l'usinage de ce type de matériaux, avec des caractéristiques qui s'avèrent vraiment avantageuses.

### Etat de la technique

Dans le secteur aéronautique, l'utilisation de matériaux comme les composites ou les céramiques progresse de jour en jour, ces matériaux étant de plus en plus employés dans d'autres domaines comme celui de l'automobile. Ces matériaux, comme certains plastiques, les bois, les DM, le graphite, etc., génèrent, lors de leur usinage, une grande quantité de poussière qui est très nocive pour la santé des ouvriers et négative pour les installations elles-mêmes, raison pour laquelle il convient de les éliminer à la source.

Parmi les solutions connues jusqu'à présent pour l'élimination de ces restes de poussière ou copeaux, on a recours à des systèmes d'aspiration qui sont généralement externes par rapport à la tête de la machine-outil qui réalise l'usinage.

Des outils "creux" sont également utilisés pour des travaux de fraisage et d'alésage, autrement dit, l'outil lui-même possède un conduit interne par lequel il est possible d'effectuer l'aspiration, permettant ainsi d'appliquer l'aspiration exactement au point de travail de l'outil ; ce qui est positif pour améliorer les conditions de l'aspiration mais le guidage des matériaux aspirés depuis le point d'aspiration jusqu'à leur destination postérieure est problématique, puisque, du fait que l'outil tourne pendant l'usinage, il est compliqué d'appliquer sur ledit outil un conduit d'aspiration qui ne doit pas tourner, ce qui exige l'utilisation de systèmes à joint rotatif, solution qui présente une complexité de réalisation pour de grandes vitesses.
De plus, en raison du problème de manque d'espace à l'intérieur de la tête, on a généralement recours à l'installation de conduits d'aspiration à l'extérieur de la tête, avec les problèmes que cela suscite en termes d'occupation d'espace, incidence négative sur le design extérieur de la tête, etc.

Conformément à tout ce qui précède, la solution adéquate passe par l'utilisation d'un outil creux qui permettra de faire coïncider le point de travail avec celui d'aspiration, et un système d'aspiration relié audit outil qui sera intégré dans la tête de fraisage et disposé coaxialement par rapport à l'axe de rotation de l'outil, formant ainsi une partie intégrée dans la tête elle-même.

Dans le cas précis de la tête d'une fraiseuse, quand ladite tête présente une transmission externe ou est du type multibroche ou à attache manuelle, il serait possible d'avoir une liberté suffisante en matière de dimensions pour disposer le conduit d'aspiration à l'intérieur de la tête, mais, en revanche, pour les têtes munies d'une électrobroche (électrospindle) et de systèmes d'attache automatique, il n'y a pas une liberté suffisante en matière de dimensions pour disposer un conduit d'aspiration intérieur et coaxial.

Sur les têtes de fraiseuses avec système d'attache automatique, on connaît déjà la réalisation du tirant central de l'électrobroche selon une conception creuse pour faire passer à l'intérieur un produit lubrifiant de l'outil, comme de l'huile de coupe, ou un mélange d'air et d'huile, ou seulement de l'air, mais toujours pour apporter quelque chose qui lubrifiera et jamais pour extraire un produit sec, comme la poussière ou les copeaux générés pendant l'usinage.

Une des causes de cela est que, dans toutes les conceptions de têtes connues jusqu'à présent, avec système d'attache automatique et tirant central creux pour la lubrification, le diamètre du conduit axial creux du tirant ne dépasse pas les 5 millimètres, dimension qui est suffisante pour le passage du lubrifiant mais insuffisante pour le passage des déchets d'usinage, pour lesquels est exigé un conduit d'un diamètre minimum de 10 millimètres. Sur les têtes traditionnelles, ledit conduit de lubrification est en plus limité à la dimension indiquée parce que le manque d'espace empêche de surdimensionner le tirant et il n'y a eu jusqu'alors aucune conception qui, avec les dimensions de construction, permettait d'avoir un conduit de diamètre supérieur sans affaiblir, au-delà de ce qui est souhaité, la résistance du tirant et sa fixation au système d'attache de l'outil.

Par ailleurs, pour pouvoir usiner lesdits composites, matériaux céramiques, graphite, plastiques, etc., il est nécessaire que l'outil travaille à une grande vitesse et, souvent, il convient d'atteindre des vitesses supérieures à 15.000 tours/minute (tr./min.) et d'atteindre la plage des 20.000 tr./min., vitesse qu'il sera même utile de dépasser pour le processus d'usinage lui-même. Par exemple, les matériaux céramiques exigent des vitesses supérieures à 13.500 tr./min. ; les CMC, des vitesses supérieures à 14.000 tr./min. ; les plastiques, le graphite, les FRP, les DM et les bois, des vitesses supérieures à 15.000 tr./min. ; et le magnésium, le polystyrène et les résines, des vitesses supérieures à 20.000 tr./min. En ce qui concerne ces deux derniers matériaux, les vitesses doivent être bien plus élevées.

Ainsi, jusqu'à présent, on ne connaissait aucun système à joint rotatif qui aurait pu travailler auxdites vitesses. Les systèmes à joint rotatif traditionnels ne fonctionnaient pas au-dessus des 15.000 tr./min., raison pour laquelle on ne connaissait jusqu'à présent aucun système à joint rotatif qui, en travaillant à de grandes vitesses, aurait permis de raccorder sur une tête d'usinage l'extrémité du tirant central creux et rotatif, opposé à l'outil, avec un tronçon de conduit d'aspiration correspondant installé en position fixe et ne devant pas tourner.

Le Brevet allemand DE 195 12 401 décrit une tête de fraiseuse conçue spécifiquement pour l'usinage de modèles en plastique et en bois. Ledit brevet décrit l'utilisation d'un outil creux, à l'intérieur duquel pénètre un tube central en plastique permettant d'aspirer à l'intérieur la poussière et les déchets d'usinage.

Entre ledit tube central en plastique, qui ne tourne pas, et l'outil et les parties rotatives de la machine, il est mis en place des roulements de glissement qui sont, comme le tube, en plastique. Avec cette réalisation, il n'est pas possible de travailler à des vitesses supérieures à 15.000 tr./min. et il arrive même, à l'approche de cette vitesse, que surviennent des problèmes d'échauffement sur les roulements, ce qui oblige à adopter des solutions de ventilation forcée et à installer des dispositifs de sécurité qui déconnectent le moteur de commande de l'outil. De plus, cette solution ne permet pas de concevoir une tête avec une robustesse suffisante pour pouvoir usiner d'autres matériaux plus durs, comme les composites, les céramiques, etc.

La publication technique allemande "Die Gießerei und ihre Helfer" (L'atelier de fonte et ses aides) 1989/90, pages B6 à B8, décrit un dispositif de fraisage pour usiner de la mousse dure, dispositif selon lequel le tirant central creux qui supporte la fraise permet l'aspiration de la poussière et des copeaux par l'intérieur. Ce tirant central creux traverse le moteur de commande de la fraise et débouche, en tournant librement, à l'extérieur du moteur, où il est connecté à un tuyau souple d'aspiration. Et de nouveau, dans ce cas, le problème se pose au niveau de la connexion entre le tirant central et le tuyau souple, de telle sorte que les joints rotatifs ou roulements disposés entre les deux ne permettent pas de dépasser les 15.000 tr./min.

Les Brevets US 2 643 641 et US 3 057 417 décrivent une tête pour l'alésage de pierres qui présente un conduit central par lequel sont aspirés la poussière et les déchets de l'alésage. Cette tête ne présente pas la problématique des dimensions réduites des têtes de fraiseuses avec système d'attache automatique, mais elle ne travaille pas non plus aux grandes vitesses de celles-ci.

D'autres dispositifs d'usinage connus, équipés d'un système d'aspiration de la poussière et des déchets d'usinage, sont divulgués dans les brevets/deinandes de brevet publiés JP 2002-166320A (montrant une tête de fraiseuse selon le préambule de la revendication 1) et EP 1738866A1.

Par ailleurs, il est exigé du système d'attache de l'outil, appelé pince d'attache, une précision en matière de centrage, de force d'attache et d'irréversibilité, autrement dit l'outil ne doit pas se détacher même en cas de défaut d'alimentation électrique et/ou hydraulique, ce qui nécessite, pour l'usinage des matériaux indiqués précédemment, d'utiliser des systèmes d'attache qui présentent lesdites caractéristiques et qui permettent en plus de travailler à de grandes vitesses, à plus de 15.000 tr./min.

Parmi les systèmes d'attache plus traditionnels, que sont les HSK et les ISO, ces derniers ne sont pas adaptés pour des grandes vitesses étant donné que, tandis que sur les HSK, la force centrifuge tend à augmenter la force d'attache, sur les ISO, c'est précisément l'inverse.

### Objet de l'invention

L'invention a pour objet une tête de fraiseuse selon la revendication 1.

Selon l'invention, il est proposé une tête de fraiseuse munie d'un système d'attache rapide de outil, du type des têtes à électrobroches, intégrant à l'intérieur de la broche, et plus précisément à travers son tirant central creux, une aspiration des copeaux légers et/ou de la poussière générés pendant l'usinage, ces déchets entrant dans le conduit axial du tirant central creux à travers un outil creux.

Un des objectifs de l'invention et une partie essentielle de celle-ci est de faire en sorte qu'une tête de fraiseuse munie d'un système d'attache rapide, comme une pince d'attache de type HSK, sur laquelle l'outil travaille à une vitesse élevée (au-dessus des 15.000 tr./min.), intègre un système à joint rotatif sec entre le tirant central rotatif et un conduit fixe accouplé à l'extrémité du tirant opposé à celle de l'outil, de manière à ce que le système à joint rotatif sec permette la rotation à grande vitesse du tirant central creux par rapport audit conduit fixe d'aspiration.

Un autre objectif de l'invention est que le système à joint rotatif sec, capable de travailler à une vitesse élevée, intègre des moyens qui amélioreront la dépression dans le conduit axial du tirant central creux et que, en plus, lesdits moyens gênent l'entrée de poussière, à travers le système à joint rotatif lui-même, depuis la partie externe du tirant vers sa partie interne.

Pour obtenir tout cela, il a fallu tout d'abord modifier l'accouplement entre le tirant central creux et la pince d'attache, pour parvenir à ce que, sans affaiblir ledit accouplement ni le tirant central lui-même, le diamètre du conduit intérieur de ce dernier dépasse les 5 millimètres traditionnels et atteigne 10 millimètres ou plus.

Par ailleurs, au lieu d'un joint rotatif traditionnel, pour le raccordement entre l'extrémité supérieure du tirant creux central et le conduit fixe d'aspiration, il a été conçu un système à joint rotatif sec basé sur le principe consistant en ce que, entre les parois du tirant central et celles dudit conduit, il existe un ajustement suffisant pour garantir l'aspiration, mais sans contact physique, de manière à ce que le tirant, en l'absence de contact physique, puisse tourner à une grande vitesse (supérieure à 15.000 tr./min.), par rapport au conduit qui reste statique, sans produire d'usure sur lesdits éléments.

De plus, il a été prévu d'intégrer dans la zone du joint rotatif sec une alimentation d'un flux d'air sous pression qui améliore la dépression dans le tirant et, par conséquent, l'aspiration de poussière, permettant en même temps de garantir la propreté du joint et donc d'éviter le dépôt de saleté dans cette zone, par un effet d'autonettoyage. En ce sens, il a été prévu que la partie de l'extrémité supérieure du tirant central creux, qui est en relation avec l'extrémité correspondante du conduit d'aspiration fixe, établisse, par rapport à ce dernier, un trajet labyrinthique qui, en maintenant l'uniformité de la dimension du diamètre du conduit du tirant central et celle du conduit fixe, gêne l'entrée d'éléments étrangers et de saletés dans cette zone.

Cette réalisation préconisée permet d'obtenir, par conséquent, une tête de fraisage à attache automatique et grande vitesse, au-dessus de 15.000 tr./min., adaptée à l'usinage de matériaux légers comme les alliages en aluminium, magnésium et MMC (composites à matrice métallique) qui, lors de l'usinage, produisent des copeaux légers, y compris tout matériau qui, lors de son usinage, produit de la poussière et des copeaux, comme les composites à matrice polymérique (FRP - "Fiber Reinforced Plastics"), les plastiques en général, les polystyrènes ou les matériaux pour modèles et composites à matrice céramique (CMC - "Ceramic Matriz Composites"), les céramiques, le graphite, le bois, DM, etc. de manière à ce que ladite tête présente une aspiration de copeaux et/ou de poussière sèche, par l'intérieur de l'outil et du tirant central creux de la broche, et intègre un système à joint rotatif sec capable de permettre l'accouplement de l'extrémité supérieure du tirant central creux qui tourne à grande vitesse, à un conduit fixe d'aspiration qui ne tourne pas.

Ledit conduit d'aspiration peut ainsi conduire lui-même les copeaux et/ou la poussière aspirés jusqu'au réservoir de collecte correspondant, et être facilement assemblé aux moyens de conduite jusqu'audit réservoir, ledit conduit pouvant être monté par l'intérieur de la tête et de la fraiseuse, selon une disposition totalement intégrée et masquée, y compris dans le cas de têtes en angle.

### Description des figures

La figure 1 représente une vue en section longitudinale d'une tête d'usinage à attache automatique conventionnelle.
La figure 2 représente une vue en section longitudinale de la tête à attache automatique de la figure précédente, modifiée selon le système de l'invention.
La figure 3 représente une vue en section longitudinale d'une autre tête d'usinage à attache automatique conventionnelle.
La figure 4 représente une vue en section longitudinale de la tête à attache automatique de la figure précédente, modifiée selon le système de l'invention.
La figure 5 est un détail agrandi de l'extrémité V correspondant au joint rotatif sec des figures 2 et 4.
La figure 6 représente un exemple d'application du système préconisé sur une fraiseuse à bois.
La figure 7 est un exemple d'application du système préconisé sur une fraiseuse d'usinage de pièces métalliques.

### Description détaillée de l'invention

L'objet de l'invention se réfère à un système d'extraction de la poussière et/ou des copeaux à travers une tête d'usinage à grande vitesse avec attache automatique, comme une tête de fraiseuse, avec une réalisation qui permet d'aspirer les déchets de l'usinage par un conduit intérieur à travers un outil creux et le tirant central rotatif de la tête.

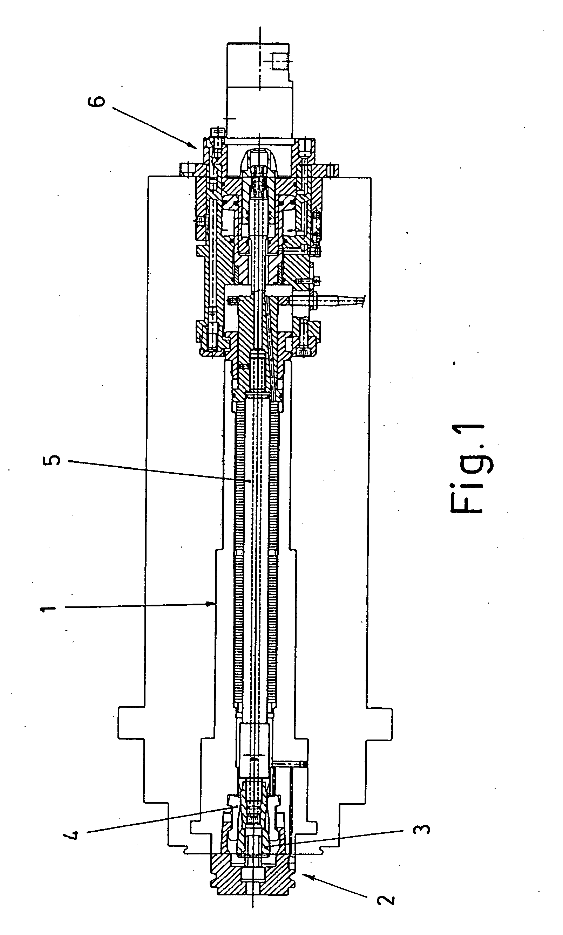

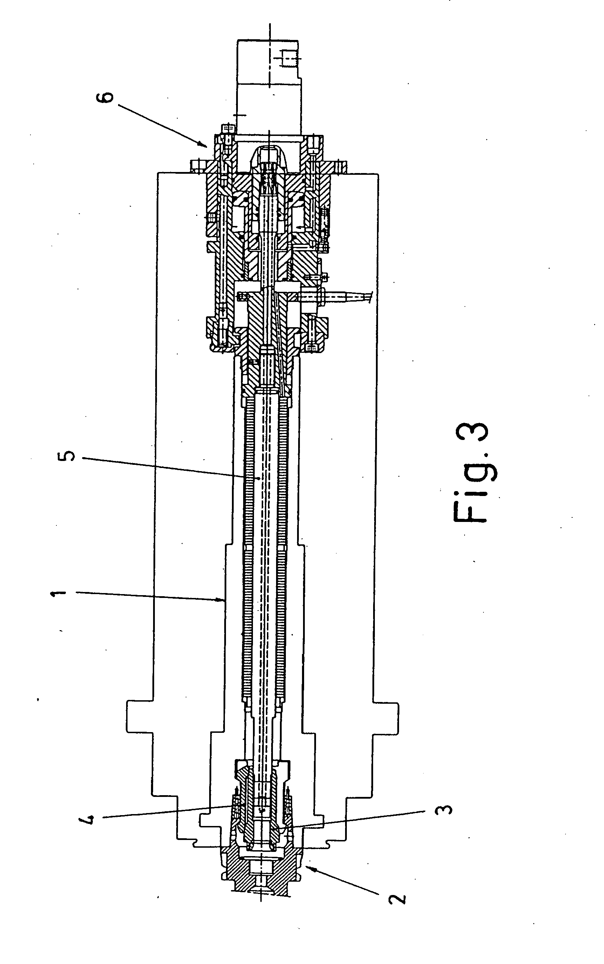

Ce type de têtes se compose d'un ensemble qui comprend une broche rotative (1), sur laquelle est assemblé à une extrémité un porte-outil (2) avec un cône d'attache (3) et des mâchoires de serrage (4), un tirant creux (5) s'étendant axialement pour le passage de lubrifiants, tandis que l'extrémité postérieure intègre un joint rotatif (6), comme indiqué sur les figures 1 et 3.

Dans cette application, les cônes porte-outil (3) les plus utilisés sont ceux de type HSK, avec lesquels le système d'attache s'effectue à l'aide de griffes ou de mâchoires (4) qui s'ajustent dans un creux (3.1) taillé à l'intérieur du cône (3) qui est en forme de coupe, de manière à ce que, à mesure que la vitesse de rotation augmente, la force centrifuge plaque contre le corps de la broche (1) les mâchoires (4) qui maintiennent le cône (3), ce qui garantit d'obtenir un système d'attache avec un meilleur maintien et ce qui permet des conditions d'usinage plus agressives. Par ailleurs, au niveau du raccordement du cône (3) et de la broche (1), il y a un double contact entre les surfaces correspondantes, permettant ainsi une meilleure répétitivité de la mise en place du cône (3).

Ce type de cônes (3) est cependant très sensible à la présence de particules, comme les copeaux ou la poussière, qui peuvent empêcher une bonne mise en place si les surfaces de contact n'ont pas été nettoyées correctement pendant l'opération de changement d'outil.

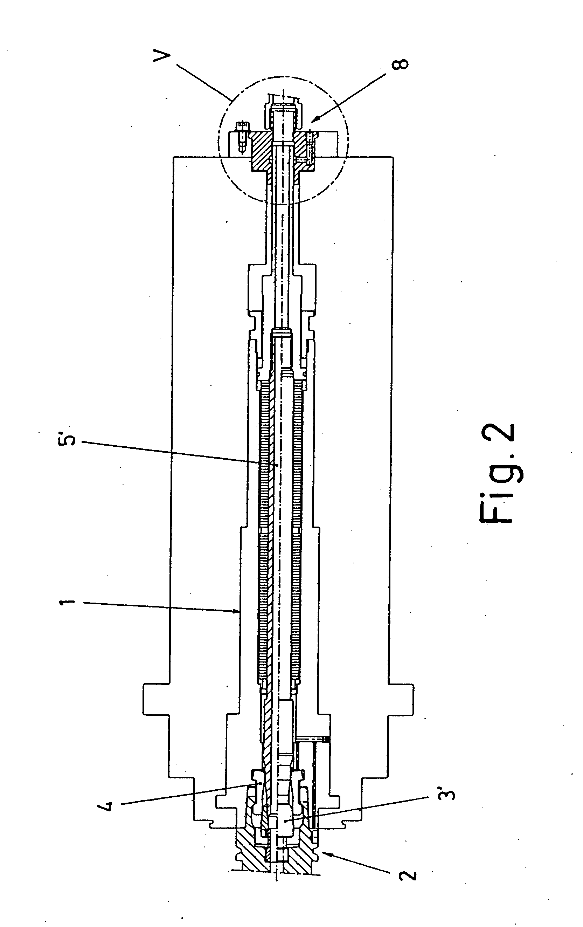

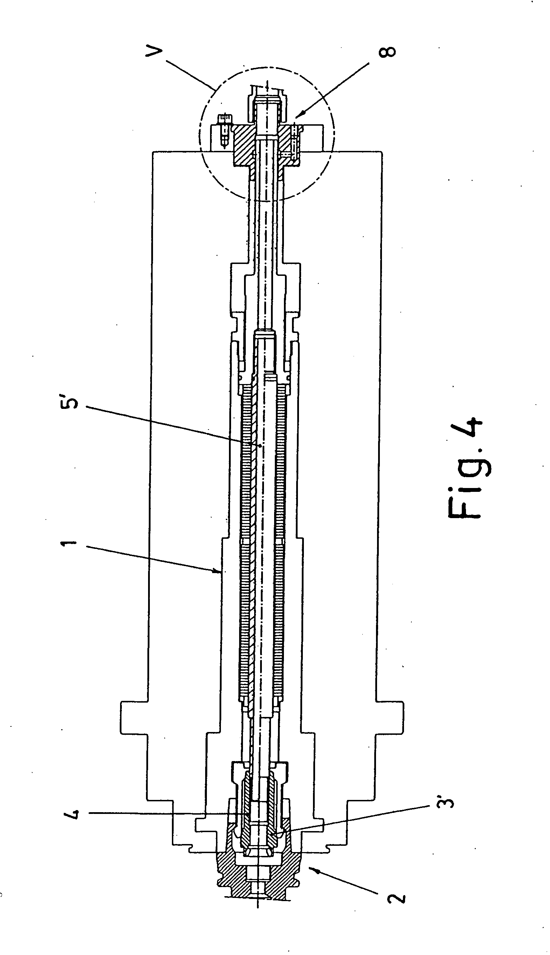

Le système d'extraction de copeaux préconisé fait en sorte qu'il ne reste pas de copeaux et/ou de poussière sur les parois de contact de l'accouplement du cône (3), grâce à une aspiration qui est réalisée par l'intérieur de la tête elle-même. Pour cela, des modifications sont apportées sur le cône d'attache (3) lui-même, lesquelles permettent d'avoir un tirant central creux (5') d'un plus grand diamètre, selon les figures 2 et 4.

Pour cela, le tirant central creux (5') est allongé et, dans sa nouvelle réalisation, le cône d'attache (3') est raccourci, sans réaliser aucune modification sur les mâchoires de serrage (4), ce qui permet d'augmenter le diamètre du tirant (5') pour y faire passer les copeaux et/ou la poussière à l'intérieur.

Par ailleurs, un tuyau fixe (7) d'absorption est raccordé à la partie postérieure du tirant creux (5') de manière à ce que, tandis que le tirant creux (5') effectue un mouvement rotatif pendant le fonctionnement, le tuyau d'absorption (7) doive rester fixe, raison pour laquelle il faut modifier le joint rotatif traditionnel (6) de ce type de têtes.

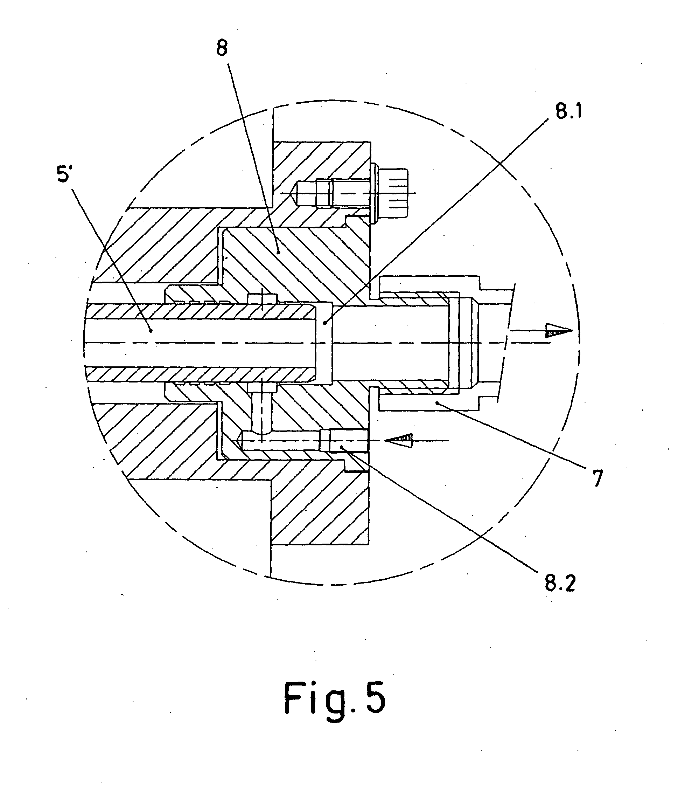

En ce sens, selon le détail de la figure 5, il est mis en place un joint rotatif sec (8) permettant au tirant central creux (5') de réaliser son mouvement rotatif tandis que le tuyau (7) reste statique.

Ledit joint rotatif sec (8) détermine un logement (8.1) où est insérée la partie postérieure du tirant central creux (5') sans établir de contact avec les parois dudit logement (8.1), tandis que le tuyau d'absorption (7) est raccordé à l'extrémité postérieure dudit joint (8), de manière à ce que l'accouplement entre ledit tuyau d'absorption (7) et le tirant central creux (5') soit établi sans contact entre eux, ce qui permet d'obtenir un accouplement permettant la rotation du tirant (5') par rapport au tuyau d'absorption (7) qui reste statique.

Par ailleurs, sur le joint rotatif sec (8), il est prévu une entrée latérale (8.2) par laquelle il est possible d'injecter de l'air sous pression pour nettoyer la zone (8.1) des éventuelles impuretés, en établissant en plus dans cette zone (8.1) une dépression qui garantit le bon accouplement du tirant creux (5') sur le joint (8) et, par conséquent, par rapport au tuyau d'absorption (7).

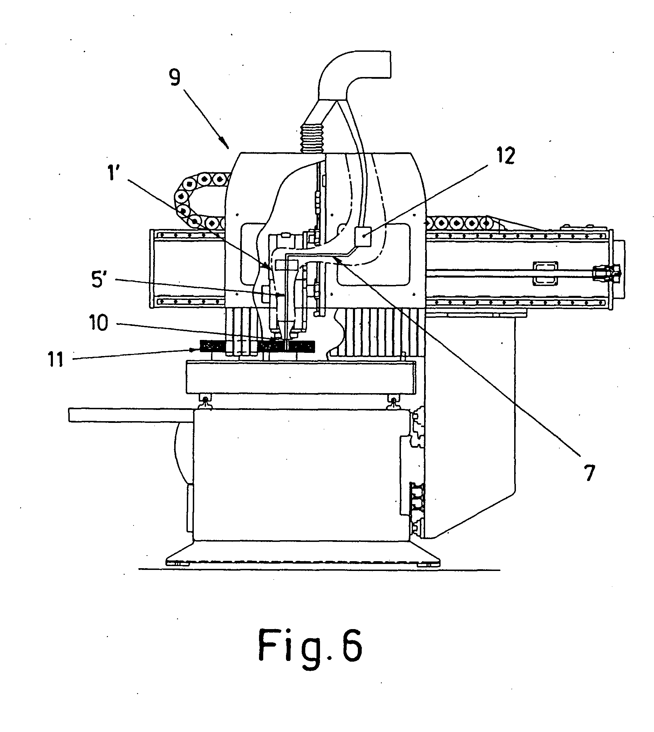

Le système préconisé peut, par conséquent, être implanté sur tout type de broche rotative (1) d'une tête d'usinage et être appliqué, par exemple, sur une fraiseuse à bois (9) comme représenté sur la figure 6.

Ladite fraiseuse à bois (9) dispose d'une électrobroche (1') avec un tirant central creux (5') surdimensionné, auquel est raccordé un outil d'usinage (10) creux, de telle sorte que, pendant l'usinage de la pièce de travail (11), le copeau produit est absorbé à travers l'électrobroche (1') par l'intérieur du tirant central creux (5'), grâce à l'absorption réalisée par une pompe d'aspiration (12) à travers un tuyau d'aspiration (7).

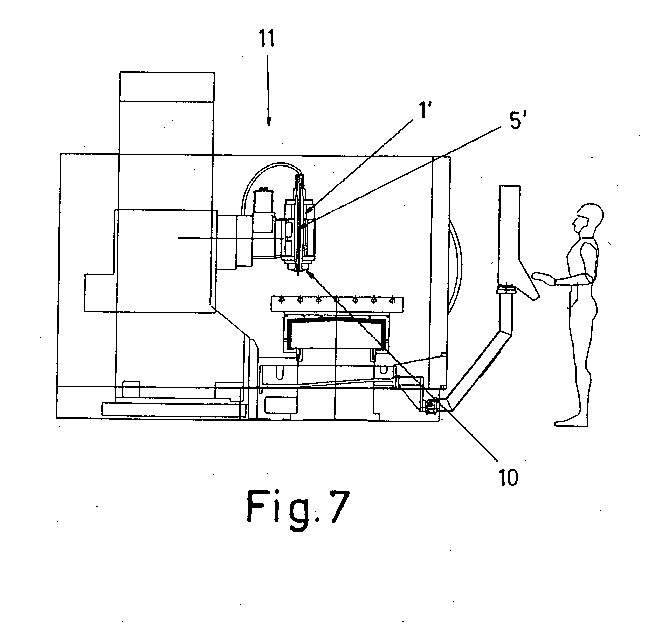

La réalisation est semblable à une fraiseuse (11) pour pièces métalliques, comme celle représentée sur la figure 7, qui comprend également une électrobroche (1') avec un tirant central creux (5') surdimensionné, sur l'extrémité duquel est assemblé l'outil d'usinage (10) qui est également creux.

## Revendications

1. Tête de fraiseuse comprenant une attache automatique, une broche rotative (1) avec un tirant central creux (5') et un système d'extraction des copeaux et/ou des poussières générés pendant l'usinage, ce système d'extraction réalisant une aspiration à travers le tirant central creux (5'), ce tirant central creux (5') ayant un diamètre suffisamment important pour permettre le passage, à l'intérieur de celui-ci, desdits copeaux, cette tête de fraiseuse comprenant un porte-outil (2) assemblé à une extrémité du tirant central creux (5'), avec un cône d'attache automatique (3'), et étant **caractérisée en ce que** l'autre extrémité du tirant central creux (5') est accouplée avec un conduit d'aspiration (7) statique, au moyen d'un joint rotatif sec (8) déterminant un logement (8.1) dans lequel s'insère ladite autre extrémité du tirant central creux rotatif (5') sans contact de celui-ci avec la paroi dudit logement (8.1), afin d'obtenir un accouplement rotatif entre eux, ce qui permet le fonctionnement à des vitesses élevées d'usinage et l'extraction des poussières et/ou des copeaux résiduels par l'intérieur du tirant central creux (5').

2. Tête de fraiseuse selon la revendication 1, dans laquelle le conduit d'aspiration (7) statique est assemblé à la partie postérieure du joint rotatif sec (8), un raccordement sans contact étant établi au moyen dudit joint rotatif sec (8) entre le tirant central creux (5') et ledit conduit d'aspiration (7), avec liberté de rotation entre eux.

3. Tête de fraiseuse selon la revendication 1 ou 2, dans laquelle le joint rotatif sec (8) dispose d'une entrée latérale (8.2), à travers laquelle est injecté de l'air sous pression pour nettoyer et pressuriser le logement (8.1) dans lequel est insérée l'extrémité du tirant central creux rotatif (5').

4. Tête de fraiseuse selon l'une quelconque des revendications 1 à 3, dans laquelle le diamètre du tirant central creux (5') est supérieur ou égal à 10 mm.

5. Tête de fraiseuse selon l'une quelconque des revendications 1 à 4, dans laquelle ledit conduit d'aspiration (7) est un tuyau souple.

6. Tête de fraiseuse selon l'une quelconque des revendications 1 à 5, dans laquelle le tirant central creux (5') est capable de tourner à une vitesse supérieure à 15.000 tr./min.

## Claims

1. A milling machine head comprising an automatic fastener, a rotary spindle (1) with a hollow central tie rod (5'), and an extractor system for extracting the swarf and/or dust generated during machining, the extractor system applying suction via the hollow central tie rod (5'), said hollow central tie rod (5') having a diameter that is large enough to allow said swarf to pass inside the tie rod, said milling machine head including a tool carrier (2) assembled to one end of the hollow central tie rod (5') with an automatic attachment cone (3'), and being **characterized in that** the other end of the hollow central tie rod (5') is coupled with a static suction duct (7) by means of a dry rotary joint (8) defining a housing (8.1) into which said other end of the rotary hollow central tie rod (5') is inserted without making contact with the wall of said housing (8.1) so as to obtain rotary coupling therebetween, thus enabling operation to take place at high machining speeds and enabling residual swarf and/or dust to be extracted via the inside of the hollow central tie rod (5').

2. A milling machine head according to claim 1, wherein the static suction duct (7) is assembled to the posterior portion of the dry rotary joint (8), contactless connection being established by means of said dry rotary joint (8) between the hollow central tie rod (5') and said suction duct (7) with mutual freedom in rotation.

3. A milling machine head according to claim 1 or claim 2, wherein the dry rotary joint (8) has a lateral inlet (8.2) through which air is injected under pressure to clean and pressurize the housing (8.1) in which the end of the rotary hollow central tie rod (5') is inserted.

4. A milling machine head according to any one of claims 1 to 3, wherein the diameter of the hollow central tie rod (5') is greater than or equal to 10 mm.

5. A milling machine head according to any one of claims 1 to 4, wherein said suction duct (7) is a flexible hose.

6. A milling machine head according to any one of claims 1 to 5, wherein the hollow central tie rod (5') is capable of rotating at a speed greater than 15,000 rpm.

## Patentansprüche

1. Kopf einer Fräsmaschine umfassend eine automatische Befestigung, eine umlaufende Spindel (1) mit einer mittleren Hohlstange (5') sowie ein System zum Abführen der während der Bearbeitung erzeugten Späne und/oder Stäube, wobei dieses Abführsystem ein Absaugen durch die mittlere Hohlstange (5') hindurch bewirkt, wobei diese mittlere Hohlstange (5') einen Durchmesser aufweist, der groß genug ist, um den Durchgang der Späne durch sie zu ermöglichen, wobei dieser Fräsmaschinenkopf einen mit einem Ende der mittleren Hohlstange (5') verbundenen Werkzeugträger (2) mit einem Konus zur automatischen Befestigung (3') aufweist und
**dadurch gekennzeichnet ist, daß** das andere Ende der mittleren Hohlstange (5') mit einer statischen Absaugleitung (7) mittels einer trockenen Drehkupplung (8) verbunden ist, die eine Aufnahme (8.1) festlegt, in die sich das andere Ende der umlaufenden mittleren Hohlstange (5') ohne Kontakt mit der Wand der Aufnahme (8.1) einfügt, um eine Drehverbindung zwischen ihnen zu erhalten, was den Betrieb mit hohen Bearbeitungsgeschwindigkeiten sowie das Abführen der Stäube und/oder der restlichen Späne über den Innenraum der mittleren Hohlstange (5') ermöglicht.

2. Fräsmaschinenkopf nach Anspruch 1, bei dem die statische Absaugleitung (7) mit dem hinteren Teil der trockenen Drehkupplung (8) verbunden ist, wobei mittels der trockenen Drehkupplung (8) zwischen der mittleren Hohlstange (5') und der Absaugleitung (7) eine berührungslose Verbindung mit Drehfreiheit zwischen ihnen hergestellt ist.

3. Fräsmaschinenkopf nach Anspruch 1 oder 2, bei dem die trockene Drehkupplung (8) über einen Seiteneingang (8.2) verfügt, durch den Druckluft eingespritzt wird, um die Aufnahme (8.1), in die das Ende der umlaufenden mittleren Hohlstange (5') eingesetzt ist, zu reinigen und mit Druck zu beaufschlagen.

4. Fräsmaschinenkopf nach einem der Ansprüche 1 bis 3, bei dem der Durchmesser der mittleren Hohlstange (5') größer als oder gleich 10 mm ist.

5. Fräsmaschinenkopf nach einem der Ansprüche 1 bis 4, bei dem die Absaugleitung (7) ein Schlauch ist.

6. Fräsmaschinenkopf nach einem der Ansprüche 1 bis 5, bei dem die mittlere Hohlstange (5') geeignet ist, mit einer Geschwindigkeit von über 15.000 U/Min. zu drehen.
